# EUROPÄISCHE PATENTSCHRIFT

(11) **EP 0 676 163 B1**
(45) Veröffentlichungstag und Bekanntmachung des Hinweises auf die Patenterteilung: **30.05.2001**
(21) Anmeldenummer: 95810223.8
(22) Anmeldetag: 05.04.1995
(51) Int. Cl.: A47J 31/46

(54) **Kaffeemaschine, insbesondere Haushaltkaffeemaschine**
Coffee brewer, esp. for domestic use
Machine à café, notamment machine à café ménagère

(30) Priorität: 08.04.1994 CH 105494
(43) Veröffentlichungstag der Anmeldung: 11.10.1995
(73) Patentinhaber: M. Schaerer AG, 3302 Moosseedorf (CH)
(72) Erfinder: Lüssi, André, CH-3303 Jegenstorf (CH); Sinzig, Peter, CH-3073 Gümligen (CH)
(74) Vertreter: BOVARD AG - Patentanwälte

(56) Entgegenhaltungen:
- EP-A- 0 307 497
- EP-A- 0 313 496
- EP-A- 0 483 700
- EP-A- 0 538 191
- DE-A- 3 505 499
- FR-A- 770 031
- FR-A- 818 729
- FR-A- 2 549 708
- US-A- 1 473 898

## Beschreibung

Die vorliegende Erfindung bezieht sich auf eine Kaffeemaschine, insbesondere auf eine Haushaltkaffeemaschine gemäss dem Oberbegriff des Patentanspruchs 1.

Eine derartige Kaffeemaschine ist in der EP 0 577 561 offenbart. Sie umfasst drei Boiler zum Erhitzen von Wasser. Ein erster Boiler dient dazu, Heisswasser in einer bestimmten Menge an eine Brüheinrichtung zum Erzeugen von Kaffee abzugeben, welcher über eine Kaffeebezugsdüse ausgegeben wird. In einem zweiten Boiler ist Heisswasser vorhanden, das über ein Heisswasserbezugsventil und über eine Heisswasserdüse, beispielsweise zum Aufbrühen von Tee, ausgebbar ist. In einem dritten Heisswasserboiler, der nicht vollständig mit Wasser gefüllt ist, ist im restlichen Volumen Wasserdampf vorhanden. Dieser kann über einen Dampfbezugshahn an eine Dampfdüse, üblicherweise zum Erhitzen von kalten Getränken oder zum Aufschäumen von Milch abgegeben werden. Kaffee, Heisswasser und Dampf können bei dieser Maschine gleichzeitig bezogen werden. Eine ständige Dampfbereitschaft ist vorhanden. Die Maschine weist einen relativ komplexen Aufbau und eine Ausstattung auf, der oder die vor allem für die Verwendung in Gaststätten gerechtfertigt ist. Der mit dieser Kaffeemaschine erzielbare Komfort ist zwar wünschenswert, aber im harten Konkurrenzkampf um Haushaltkaffeemaschinen in preislicher Hinsicht kaum tragbar.

In der DE 42 04 746 ist eine Kaffeemaschine zur Herstellung von Cappuccino mit zwei in einem Heizblock vorgesehenen Durchlauferhitzern offenbart. Der erste Durchlauferhitzer ist über ein Rückschlagventil mit einem Frischwassertank verbunden und endet ausgangsseitig über ein Steigrohr in einem Brühkopf. Der zweite Durchlauferhitzer ist an eine Dampfdüse angeschlossen und wird eingangsseitig über eine Dosierpumpe gespeist. Es ist ein Zweiwegeventil vorhanden, mit dem alternativ die Wasserzufuhr an den einen oder an den anderen Durchlauferhitzer umgeschaltet werden kann. Wird beim Herstellen von Cappuccino, zum Aufschäumen von Milch, Dampf benötigt, wird das Zweiwegeventil in die entsprechende Stellung gebracht und der zweite Durchlauferhitzer aktiviert. Das lediglich in geringer Menge mit einer Pumpe durch diesen Durchlauferhitzer geförderte Wasser beginnt darin zu kochen und erzeugt Dampf, der aus der Dampfdüse ausgestossen wird. Vorteilig an dieser Vorrichtung ist der relativ einfache Aufbau, nachteilig wirkt sich aus, dass kein Heisswasserbezug möglich ist und dass, nachdem das Zweiwegeventil in die Dampfstellung gebracht worden ist, einige Zeit verstreicht, bis aus der Düse auch wirklich Heissdampf austritt. Eine ständige Dampfbereitschaft besteht nicht.

Eine ähnliche Maschine zum Zubereiten von Heissgetränken ist in der EP 0 307 497 offenbart. Dort ist lediglich ein Durchlauferhitzer vorhanden, der zum Ausgeben, entweder von Heisswasser über einen ersten Kanal an eine Kaffeezubereitungseinrichtung oder zum Ausgeben von Dampf über einen zweiten Kanal an eine Dampfdüse bestimmt ist. Die beiden Kanäle werden mit einem Umschaltventil von einer neutralen Mittenstellung, je nachdem, ob ein Kaffeebezug oder ein Dampfbezug gewünscht wird, an den Durchlauferhitzer angeschaltet. Auch bei dieser Maschine ist ein Heisswasserbezug nicht vorgesehen. Eine Wartezeit, bis bei einem gewünschten Dampfbezug tatsächlich Dampf aus der Dampfdüse austritt, besteht auch hier. Ein Kaffeebezug und ein Dampfbezug sind bei dieser Maschine, wie auch beim vorgängig beschriebenen Modell, nicht gleichzeitig möglich.

In der EP 0 483 700 ist ein Mehrwegventil für Kaffeemaschinen offenbart. Es weist einen Eingang auf, dem Dampf oder Heisswasser zugeführt wird. Mittels einem Drehknopf kann der einzige Eingang wahlweise mit einem von mehreren Ausgängen verbunden werden. Es ist je ein Ausgang für einen Kaffeefilter, für eine Aufschäumdüse und für einen Auffangbehälter vorgesehen.

Die FR 2 549 708 zeigt ebenfalls ein Mehrwegventil mit einem einzigen Eingang für Dampf oder Heisswasser. Je ein getrennter Ausgang für Wasser und Dampf sind vorhanden. Mit einem verdrehbar angeordneten Dampfrohr sind die beiden Ausgänge umschaltbar.

Es ist deshalb die Aufgabe der vorliegenden Erfindung eine Kaffeemaschine zu schaffen, insbesondere zum Einsatz in Haushalten, die einen einfachen Aufbau aufweist und die einfach zu bedienen ist.

Erfindungsgemäss erfolgt die Lösung dieser Aufgabe durch eine Kaffeemaschine, die die Merkmale des Patentanspruchs 1 aufweist.

Mit diesen Massnahmen wird erreicht, dass über eine gemeinsame, alternativ benutzbare Düse entweder Heisswasser oder Wasserdampf bezogen werden kann. Die Bedienung ist dank dem Vorhandensein von lediglich einem einzigen Bedienungselement, mit welchem das Umschaltventil in die vorgenannten Stellungen umgeschaltet werden kann, sehr einfach, was insbesondere bei Haushaltkaffeemaschinen wichtig ist. Vorzugsweise ist das Umschaltventil als 3/2-Wege-Keramikventil aufgebaut, welches mit einem Drehknopf von der Sperrstellung in die genannten Bezugsstellungen umgeschaltet werden kann. Ein gleichzeitiger Bezug von Kaffee und Dampf oder Heisswasser ist dank dem getrennten Vorhandensein der Kaffeebezugsdüse und der alternativ benutzbaren Düse für Dampf oder Heisswasser möglich.

Eine ständige Bereitschaft von Dampf und eine ständige Bereitschaft von Heisswasser wird durch das Vorhandensein von einem Dampfboiler sowie von einem Heisswasserboiler gewährleistet. Wartezeiten entfallen dadurch. Dies wäre dann nicht der Fall, wenn, obschon dies denkbar wäre und auch angewandt wird, anstelle der zwei genannten Boiler ein kombinierter Heisswasser- und Dampfbezugsboiler verwendet würde. Bei solchen Ausführungen entsteht eine erste Wartezeit beim Bezug von Dampf, weil dazu das Heisswasser zuerst stärker aufgeheizt werden muss. Eine zweite Wartezeit entsteht dann, wenn unmittelbar nach einem Dampfbezug ein Heisswasser- oder Kaffeebezug gefordert wird. Bevor ein solcher stattfinden kann, ist es notwendig, das Wasser auf eine zum Zubereiten von Kaffee oder Tee geeignete Temperatur abkühlen zu lassen.

Hingegen ist es möglich und angebracht, einen einzigen Heisswasserboiler zum gleichzeitigen Abgeben von Heisswasser an die Brüheinrichtung zum Herstellen von Kaffee und an die alternativ benutzbare Düse zum Beziehen von Heisswasser vorzusehen.

Das Umschaltventil ist in einer bevorzugten Ausführung über einen kreuzschlittenähnlichen Aufbau an einem Ventilträger montiert. Das Umschaltventil, an dem der bereits genannte Drehknopf zum Bedienen des Ventiles aufgesteckt ist, kann dadurch in zwei rechtwinklig zueinander stehende Richtungen verschoben und einem Drehknopfausschnitt im Gehäuse der Kaffeemaschine angepasst werden. Der Drehknopfausschnitt, beispielsweise eine runde Bohrung, kann dabei in einer engen Toleranz dem Durchmesser des Drehknopfes angepasst sein.

Es ist ebenfalls zweckmässig und vorteilhaft, die alternativ benutzbare Düse für Dampf oder Heisswasser am bereits genannten Ventilträger anzuordnen. Mit einer schwenkbaren Düse kann die Heisswasser- oder Dampfabgabe jeglichen benutzbaren Gefässen, wie Tassen oder Hafen, angepasst werden. Es ist dabei vorgesehen, dass zwischen der alternativ benutzbaren Düse und dem Ausgang des Umschaltventiles mindestens teilweise ein flexibles Leitungsstück vorhanden ist.

Anhand von Figuren ist die vorliegende Erfindung nachstehend beispielsweise näher beschrieben. Es zeigen
**Fig. 1** ein Blockschaltbild einer erfindungsgemässen Kaffeemaschine, und
**Fig. 2** eine Explosionszeichnung mit der Anordnung des Umschaltventiles und der alternativ benutzbaren Düse für Dampf oder Heisswasser am Ventilträger.

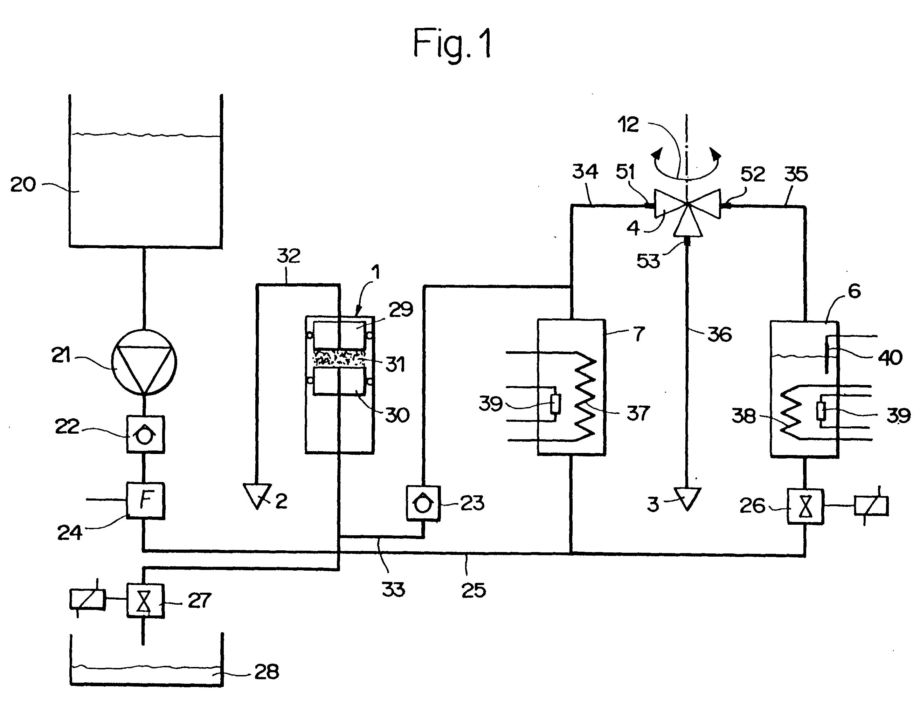

In der Fig. 1 ist der prinzipielle Aufbau einer erfindungsgemässen Kaffeemaschine lediglich blockschaltbildmässig dargestellt. Es sind lediglich die mechanischen Komponenten sichtbar. Nicht gezeichnet ist die elektrische oder elektronische Steuerung der Maschine.

Eine Brüheinrichtung 1 umfasst zwei Kolben 29, 30, die innerhalb der Brüheinrichtung 1 relativ zueinander verschiebbar sind und die zwischen einander zugewandten Stirnflächen eine Brühkammer 31 einschliessen. In der Brühkammer ist Kaffeepulver vorhanden, das mit Heisswasser durchspült wird, wodurch Kaffee entsteht, welcher über eine Kaffeeabgabeleitung 32 einer Kaffeebezugsdüse 2 zugeführt wird. Das Heisswasser wird der Brüheinrichtung 1 bzw. der Brühkammer 31 von einem Heisswasserboiler 7 über eine Heisswasserzufuhrleitung 34, 33 zugeführt. Die Heisswasserzufuhrleitung 33 ist ebenfalls eine Restwasserabfuhrleitung, welche über ein Restwasserabfuhrventil 27, das mit einem Elektromagneten ansteuerbar ist, in einen Restwasserbehälter 28 mündet. In der Heisswasserzufuhrleitung 34, 33 ist zwischen dem Heisswasserboiler 7 und der Brüheinrichtung 1 ein Rückschlagventil 23 vorhanden, welches derart wirkt, dass bei einem Druckaufbau in der Brühkammer kein Rückfluss in den Heisswasserboiler möglich ist. In der Kaffeezubereitungsphase, während dem Ausbrühen des Kaffeepulvers, ist das Restwasserabfuhrventil 27 geschlossen. Es wird geöffnet, sobald ein Kaffeebezug erfolgt ist und verhindert dadurch ein Nachtropfen von Kaffee an der Kaffeebezugsdüse 2.

Von einem Wasservorratsbehälter 20 gelangt Kaltwasser über eine Pumpe 21, über ein weiteres Rückschlagventil 22 sowie über einen Durchflussmesser 24 an eine Kaltwasserzufuhrleitung 25, welche mit einem Kaltwassereinlass des Heisswasserboilers 7 und über ein ebenfalls mit einem Elektromagneten ansteuerbares Wasserzufuhrventil 26 mit einem Kaltwassereinlass eines Dampfboilers 6 verbunden ist.

Der Dampfboiler 6 ist nur teilweise mit Wasser gefüllt. Ein Niveauwächter 40 überwacht den Füllstand und löst ein Signal zum Wasserzufuhrventil 26 aus, wenn Wasser nachgefüllt werden muss. Der Heisswasserboiler 7 ist voll mit Wasser gefüllt. In beiden Boilern 6, 7 ist je ein Heizelement 38, 37 sowie je ein Temperaturfühler 39 vorhanden. Mit dem Heizelement 38 im Dampfboiler 6 lässt sich eine höhere Wassertemperatur, vorzugsweise über 100 ° C, zum Erzeugen des notwendigen Dampfvolumens erreichen. Die optimale Heisswassertemperatur, die mit dem Heizelement 37 im Heisswasserboiler 7 erzeugt wird, liegt zwischen 80 ° und 100 °.

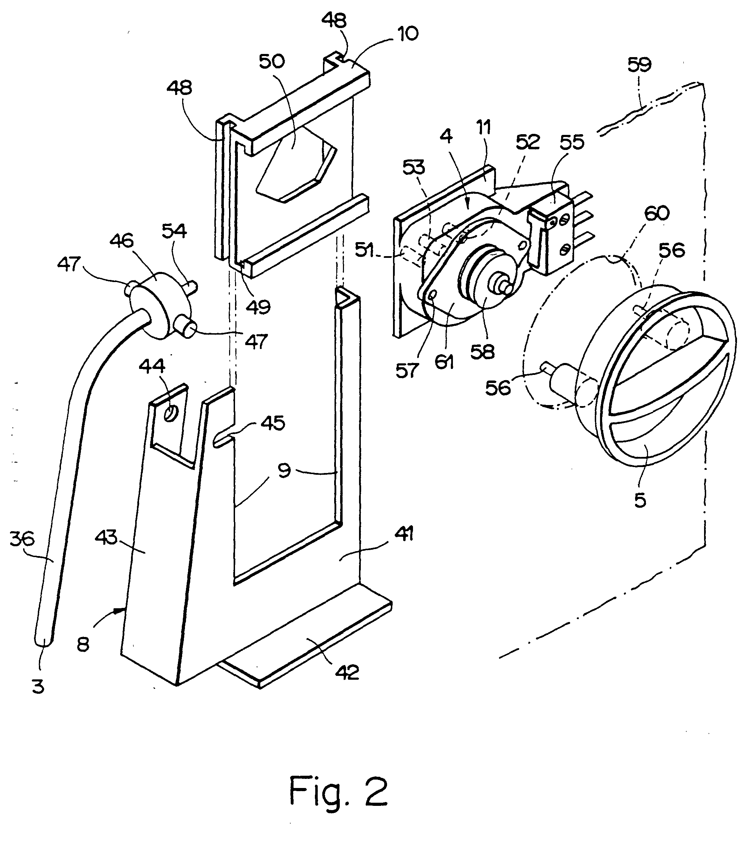

Eine Heisswasserabgangsleitung 34 vom Heisswasserboiler 7 mündet einerseits zum erstgenannten Rückschlagventil 23 und ist andererseits mit einem Heisswassereingangsanschluss 51 eines Umschaltventiles 4 verbunden. Eine Dampfabgangsleitung 35 vom Dampfboiler 6 ist mit einem Dampfeingangsanschluss 52 des Umschaltventiles 4 verbunden. Ein Umschaltventilausgangsanschluss 53 mündet über eine Dampf- oder Heisswasserleitung 36 zu einer gemeinsamen, alternativ benutzbaren Düse 3 zum Bezug von Dampf oder Heisswasser. Das Umschaltventil 4 ist vorzugsweise als Keramikventil ausgebildet und kann mit einem einzigen Bedienungselement 5, in der gezeigten Ausführung mit einem Drehknopf, von einer Sperrstellung, wie dies mit dem Pfeil 12 angedeutet ist, in eine Bezugsstellung für Dampf oder in eine Bezugsstellung für Heisswasser gedreht werden. Bei der Bezugsstellung für Heisswasser wird ein elektrischer Schalter 55 (Fig. 2) betätigt, welcher dafür besorgt ist, das die Pumpe 21 eingeschaltet wird, um den Heisswasserboiler dauernd gefüllt zu halten. Ein analoger Vorgang findet bei einem Kaffeebezug statt.

In der Fig. 2 ist in einer Explosionszeichnung ein Ventilträger 8 bzw. ein Ventiltragwinkel gezeichnet, an welchem das Umschaltventil 4 über eine Kreuzschlittenplatte 10 sowie die alternativ benutzbare Düse 3 angeordnet sind. Der Ventiltragwinkel 8 weist eine Frontplatte 41 auf, in welcher ein rechteckiger Führungssausschnitt angebracht ist, wodurch zwei parallel und beabstandet zueinander verlaufende Längsführungsmittel 9 bzw. Längsführungskanten gebildet werden. Die Kreuzschlittenplatte 10 weist auf der in der Fig. 2 gezeichneten Rückseite zwei erste Führungsnuten 48 auf, welche mit den Längsführungskanten 9 des Ventiltragwinkels 8 in Eingriff bringbar sind. Die Kreuzschlittenplatte 10 ist damit längs dem Führungsausschnitt in der Frontplatte 41 des Ventiltragwinkels 8 verschiebbar. Auf der in der Fig. 2 vorderen Seite der Kreuzschlittenplatte 10 sind zwei weitere Führungsnuten 49 vorhanden, die sich je rechtwinklig zu den ersten Führungsnuten 48 erstrecken und in welche ein Querführungsmittel 11 bzw. eine rechteckförmige Querführungsplatte 11, welche eine Grundplatte des Umschaltventiles 4 darstellt, einschiebbar ist. In der Kreuzschlittenplatte 10 ist ein im gezeigten Beispiel fünfeckförmiger Plattenausschnitt 50 vorhanden, der dazu dient, dass bei auf die Querführungsplatte 11 montiertem Umschaltventil 4 der Heisswassereingangsanschluss 51, der Dampfeingangsanschluss 52 und der Umschaltventilausgangsanschluss 53 zugänglich sind. Der Verschiebeweg in den Querführungsnuten 49 wird dadurch begrenzt, dass die genannten Anschlüsse 51, 52 am rechten oder linken Rand des Plattenausschnittes 50 anstehen. Das auf der Kreuzschlittenplatte 10 angeordnete Umschaltventil 4 ist sowohl längs den Führungskanten 9 als auch in Querrichtung dazu verschiebbar. Innerhalb eines gewissen Umkreises kann es jede Verschiebestellung relativ zum Ventiltragwinkel 8 einnehmen.

Das Umschaltventil 4 weist zwei Eingänge und einen Ausgang auf, und schliesst in der genannten bevorzugten Bauweise die Vorzüge eines Keramikventiles gemäss dem zitierten Stand der Technik ein. Die einzelnen Keramikscheiben des Umschaltventiles sind in der Fig. 2 nicht speziell dargestellt. Sie werden mit Druckfedern, im gezeigten Ausführungsbeispiel mit Tellerfedern 58 aufeinandergepresst. Auf der der Querführungsplatte 11 abgewandten Seite des Umschaltventiles ist eine im wesentlichen ovale Platte 61 vorhanden, welche einerseits dazu dient, beim Bezug von Heisswasser den bereits genannten elektrischen Schalter 55 zu betätigen und andererseits dazu vorgesehen ist, in Befestigungsbohrungen 57 Drehknopfbefestigungszapfen 56 aufzunehmen, welche vom Drehknopf 5 abstehen. Zum Montieren des Drehknopfes wird dieser durch eine Gehäusedurchgangsöffnung 60 oder eine Gehäusedurchgangsbohrung 60, welche in einem Teil einer Gehäusewandung 59 eines die Kaffeemaschine im wesentlichen umschliessenden Gehäuses angeordnet ist, durchgeschoben. Die genannten Befestigungszapfen 56 sind dabei mit den genannten Befestigungsbohrungen 57 in Eingriff zu bringen.

An der Frontplatte 41 des Ventiltragwinkels 8 ist ein Befestigungsflansch 42 zum Befestigen des Ventiltragwinkels 8 an einem nicht gezeichneten Maschinengestell angebracht. Eine Seite der Frontplatte 41 ist im weiteren zweimal etwa rechtwinklig abgebogen, so dass ein im wesentlichen U-förmiger seitlicher Kanal 43 entsteht. In einem Schenkel dieses Kanales ist eine Schwenklagerbohrung 44 und im anderen Schenkel dieses Kanales der durch die Frontplatte 41 gebildet ist, ist ein Schwenklagerausschnitt 45 vorhanden, der längs einer der Längsführungsbauten 9 in den Führungsausschnitt mündet. Die Schwenklagerbohrung und der Schwenklagerausschnitt dienen dazu, einen beispielsweise zylinderförmigen Schwenklagerkörper 46 mit zwei einander gegenüberliegenden, von dessen Mantelfläche abstehenden Schwenklagerzapfen 47 aufzunehmen und in einer zur Frontplatte 41 parallelen Ebene schwenkbar zu lagern. Von einer Seite des Schwenklagerkörpers 46 geht die Dampf- oder Heisswasserleitung 36 ab und mündet an ihrem Ende zur alternativ benutzbaren Düse 3 für Dampf oder Heisswasser. Diese Düse 3 braucht nicht unbedingt eine speziell angefertigte Düse im üblichen Sinne zu sein, sondern kann lediglich das offene Ende der Dampf- oder Heisswasserleitung 36 darstellen. Auf der dem Abgang der genannten Leitung abgewandten Stirnseite des Schwenklagerkörpers ist ein Leitungsanschlussnippel 54 vorhanden, der mit einem nicht gezeichneten flexiblen Schlauch mit dem Umschaltventilausgangsanschluss 53 zu verbinden ist.

## Patentansprüche

1. Kaffeemaschine, insbesondere Haushaltkaffeemaschine, mit einer Brüheinrichtung (1) zum Erzeugen und Ausgeben von Kaffee über eine Kaffeebezugsdüse (2), einer Dampfdüse zum Ausgeben von Dampf aus einem Dampfboiler, sowie einer Heisswasserdüse zum Ausgeben von Heisswasser, dadurch gekennzeichnet, dass die Dampfdüse und die Heisswasserdüse eine einzige alternativ benutzbare Düse (3) zum Ausgeben von Dampf oder Heisswasser ist und die alternativ benutzbare Düse (3) mit einem Umschaltventil (4) leitungsverbunden ist, an welches zudem eine erste Leitung (35) angeschlossen ist, die mit dem Dampfboiler (6), der ständig Dampf bereithält, verbunden ist, und an welches eine zweite Leitung (34) angeschlossen ist, die mit einem Heisswasserboiler (7) verbunden ist, der zum gleichzeitigen Abgeben von Heisswasser an die Brüheinrichtung (1) und an die alternativ benutzbare Düse (3) vorgesehen ist, und dass das Umschaltventil (4) mit einem einzigen Bedienungselement (5) von einer Sperrstellung in eine Dampfbezugsstellung oder in eine Heisswasserbezugsstellung umschaltbar ist.

2. Kaffeemaschine nach Anspruch 1, dadurch gekennzeichnet, dass das Umschaltventil (4) an einem Ventilträger (8) angeordnet ist, wobei zwischen dem Ventilträger (8) und dem Umschaltventil (4) ein Kreuzschlitten (9, 10, 11) vorhanden ist, mit welchem das Umschaltventil (4) relativ zum Ventilträger (8) in einer ersten und in einer zweiten rechtwinklig zueinander stehenden Richtung verschiebbar ist.

3. Kaffeemaschine nach Anspruch 2, dadurch gekennzeichnet, dass die alternativ benutzbare Düse (3) für Dampf und Heisswasser am Ventilträger (8) schwenkbar gelagert ist.

4. Kaffeemaschine nach einem der Ansprüche 1 bis 3, dadurch gekennzeichnet, dass das Umschaltventil (4) ein 3/2-Wege Keramikventil ist.

5. Kaffeemaschine nach einem der Ansprüche 1 bis 4, dadurch gekennzeichnet, dass das Bedienungselement ein Drehknopf (5) ist.

## Claims

1. Coffee machine, in particular a household coffee machine, with a brewing device (1) for generating and dispensing coffee via a coffee dispensing nozzle (2), a steam jet for dispensing steam from a steam boiler, as well as a hot water jet for dispensing hot water, characterised in that the steam jet and the hot water jet is a single jet (3), alternatively usable for dispensing steam or hot water, and the alternatively usable jet (3) is pipe-connected to a switching valve (4), to which in addition a first pipe (35) is joined, which is connected to the steam boiler (6) that constantly keeps steam ready, and to which a second pipe (34) is joined, which is connected to a hot water boiler (7), which is intended for simultaneous supply of hot water to the brewing device (1) and to the alternatively usable jet (3), and in that the switching valve (4) is switchable with a single operating element (5) from a blocked position into a steam dispensing position or into a hot water dispensing position.

2. Coffee machine according to claim 1, characterised in that the switching valve (4) is disposed on a valve support (8), a cross slide (9, 10, 11) being provided between the valve support (8) and the switching valve (4), with which cross slide the switching valve (4) is slidable relative to the valve support (8) in a first and in a second direction located at right angles to each other.

3. Coffee machine according to claim 2, characterised in that the alternatively usable jet (3) for steam and hot water is pivotably borne on the valve support (8).

4. Coffee machine according to one of the claims 1 to 3, characterised in that the switching valve (4) is a 3/2 way ceramic valve.

5. Coffee machine according to one of the claims 1 to 4, characterised in that the operating element is a turning knob (5).

## Revendications

1. Machine à café, notamment machine à café ménagère, possédant un dispositif d'ébouillantage (1) qui sert à produire du café et à en fournir par l'intermédiaire d'une buse de prélèvement de café (2), une buse à vapeur servant à fournir de la vapeur qui provient d'un générateur de vapeur ainsi qu'une buse d'eau chaude, caractérisée en ce que la buse de vapeur et la buse d'eau chaude ne font qu'une et sont réunies en une buse (3) utilisable au choix pour fournir de la vapeur ou de l'eau chaude et que la buse (3) à deux fonctions est reliée, par une conduite, à une soupape de commutation (4) à laquelle, en outre, est branchée une première conduite (35) qui est reliée au générateur de vapeur (6), lequel contient en permanence de la vapeur disponible et à laquelle est branchée une deuxième conduite (34) reliée à un chauffe-eau (7) conçu pour pouvoir fournir de l'eau chaude en même temps au dispositif d'ébouillantage (1) et à la buse (3) utilisable à la place de ce dispositif, et en ce que la soupape de commutation (4) peut passer, grâce à un seul organe de manoeuvre (5), d'une position de fermeture à une position de prélèvement de vapeur ou à une position de prélèvement d'eau chaude.

2. Machine à café selon la première revendication, caractérisée en ce que la soupape de commutation (4) est montée sur un support de soupape (8), un chariot à mouvements croisés (9, 10, 11) étant situé entre le support de soupape (8) et la soupape de commutation (4) et permettant de déplacer la soupape de commutation (4) par rapport au support de soupape (8) dans une première direction et dans une deuxième qui lui est perpendiculaire.

3. Machine à café selon la deuxième revendication, caractérisée en ce que la buse (3) utilisable soit pour la vapeur, soit pour l'eau chaude, est montée sur le support de soupape (8) de manière pivotante.

4. Machine à café selon l'une des revendications 1 à 3, caractérisée en ce que la soupape de commutation (4) est une soupape en céramique à 3/2 voies.

5. Machine à café selon l'une des revendications 1 à 4, caractérisée en ce que l'organe de manoeuvre est un bouton rotatif (5).
